# EUROPÄISCHE PATENTSCHRIFT

(11) **EP 0 688 627 B1**
(45) Veröffentlichungstag und Bekanntmachung des Hinweises auf die Patenterteilung: **16.12.1998**
(21) Anmeldenummer: 94109126.6
(22) Anmeldetag: 14.06.1994
(51) Int. Cl.: B23K 26/00, C21D 10/00

(54) **Verfahren zur Vor- oder Nachbehandlung von zu erzeugenden bzw, erzeugten Schweissnähten von Bauteilen**
Process for pre- or post-treatment of components welding seam to be executed resp. executed
Procédé de prétraitement ou de post-traitement de cordons de soudure à réaliser resp. déjà réalisés dans des composants

(43) Veröffentlichungstag der Anmeldung: 27.12.1995
(73) Patentinhaber: INPRO INNOVATIONSGESELLSCHAFT FÜR FORTGESCHRITTENE PRODUKTIONSSYSTEME IN DER FAHRZEUGINDUSTRIE MBH, 10787 Berlin (DE)
(72) Erfinder: Hammer, Timo, c/o INPRO GmbH, D-10587 Berlin (DE); Dommaschk, Ralf, c/o INPRO GmbH, D-10587 Berlin (DE)
(74) Vertreter: Hoffmann, Klaus-Dieter, Dipl.-Ing.

(56) Entgegenhaltungen:
- DE-A- 3 235 547
- DE-U- 1 806 611
- PATENT ABSTRACTS OF JAPAN vol. 10, no. 10 (M-446) (2067) 16. Januar 1986 & JP-A-60 174 258 (CHIYOUBEE TAGUCHI)
- PATENT ABSTRACTS OF JAPAN vol. 10, no. 2 (M-444) (2059) 8. Januar 1986 & JP-A-60 166 190 (CHIYOUBEE TAGUCHI) 29. August 1985
- PATENT ABSTRACTS OF JAPAN vol. 14, no. 379 (M-1012) 16. August 1990 & JP-A-02 142 686 (DAIWA CAN CO LTD) 31. Mai 1990

## Beschreibung

Die Erfindung betrifft ein Verfahren zur Vorbehandlung von insbesondere mittels während des Schweißvorgangs Laserstrahlen zu erzeugenden Schweißnähten von Bauteilen während des Schweißvorgangs, insbesondere aus Eisen- und Nichteisenmetallen durch Beeinflussung der Werkstoffeigenschaften der zu verschweißenden Bauteile, wobei vorlaufend der Schweißnaht mechanische Schwingungen zur Festigkeitssteigerung des Materials der Bauteile in diese eingeleitet werden.

Bei einem bekannten derartigen Verfahren zur Vorbehandlung von Schweißnähten von Bauteilen, insbesondere aus Nichteisenmetallen (DE-A-3235547) werden die zu verbindenden Oberflächenteile der Bauteile aneinandergelegt und dann von einem Reibwerkzeug durch Hin- und Herverschiebung relativ zueinander einer Reibreinigung unterzogen, während der oder nach deren Beendigung ihre feste Verbindung durch Schmelzverschweißung erfolgt. Hierbei bewirken die zur Reibreinigung mittels eines piezoelektrischen oder magnetostriktiven Antriebs erzeugten Schwingungen zugleich eine Festigkeitssteigerung der Bauteile aus Aluminium.

Die Erfindung betrifft außerdem ein Verfahren zur Nachbehandlung von insbesondere mittels Laserstrahlen erzeugten Schweißnähten von Bauteilen während des Schweißvorgangs, insbesondere aus Eisen- und Nichteisenmetallen durch Beeinflussung der Werkstoffeigenschaften der verschweißten Bauteile, wobei nachlaufend der Schweißnaht mechanische Schwingungen zur Beeinflussung der Erstarrungskinetik des Materials der Bauteile in diese eingeleitet werden.

Bei einem bekannten derartigen Verfahren (DE-U-1806611) werden über zwei magnetostriktive Schwingköpfe erregte Schallköpfe in Nähe der Schweißfuge so angeordnet, daß sie während des Schweißvorgangs mit gleicher Geschwindigkeit wie die Schweißelektrode, jedoch ihr folgend, bewegt werden können.

Die Erfindung betrifft ferner eine Vorrichtung zur Vor- und/oder Nachbehandlung von Schweißnähten von Bauteilen insbesondere aus Eisen- und Nichteisenmetallen, mit einer in Schweißrichtung bewegbaren Führungseinrichtung mit einem Laser und einer Laseroptik sowie mindestens einem, bezogen auf letztere längs der Schweißrichtung versetzbaren Bearbeitungselement.

Der Werkstoff innerhalb der Wärmeeinflußzone der Schweißnaht wird durch thermisch aktivierbare Vorgänge, wie z.B. durch Rekristallisation und Diffusion beeinflußt.Diese führen meist zu negativ veränderten Schweißnahtgüteparametern, wie z.B. Entfestigung von Kupfer, Koagulation von Segregaten in der Wärmeeinflußzone von aushärtbaren Werkstoffen und Martensit- und Grobkornbildung bei Stählen.

Beim Schweißen z.B. von Kupfer erweicht die vom Schweißprozeß eingebrachte Wärme den Werkstoff zwangsweise. Die Erweichung wird üblicherweise durch nachträgliches Abhämmern der Kupfer-Schweißnaht rückgängig gemacht, und zwar herkömmlicherweise von Hand mittels eines Kugelhammers. Durch das Abhämmern steigt die Versetzungsdichte im Werkstoff so hoch an, daß die gleiche Festigkeit wie im Grundwerkstoff erreicht wird. Nach außen hin hat das geschweißte Bauteil aus Kupfer dann homogene Festigkeitseigenschaften.

Beim Schweißen von hochfesten Feinkornbaustählen entstehen thermische Schädigungen durch die Koagulation von Körnern im Gefüge. Durch das entstehende grobe Gefüge sinkt die Zähigkeit des Werkstoffes, d.h. die Koagulation ist unerwünscht.

Beim Schweißen von Aluminiumbauteilen finden durch die eingebrachte Schweißwärme im Werkstoff Diffusionsvorgänge statt. Technische Aluminiumlegierungen sind kalt- oder warmaushärtend, d.h. ihre endgültige Festigkeit erhalten die kaltaushärtenden Aluminiumlegierungen erst nach einiger Zeit bei Raumtemperatur bzw. die warmaushärtenden Aluminiumlegierungen durch eine gezielte Wärmebehandlung.

Beim Aushärtevorgang bilden sich Segregate, d.h. Ausscheidungen im Werkstoff in feinstverteilter Form. Die Art, Form, Anzahl und Größe der Segregate, die entstehen, entscheiden über die Festigkeit der Legierungen. Diese Segregate koagulieren bei der Einbringung von Wärme. Die Anzahl der Segregate sinkt, ihre Größe steigt. Die Folge ist eine unerwünschte Erweichung des Werkstoffes in den wärmebeeinflußten Zonen.

Der Erfindung liegt die Aufgabe zugrunde, ein Verfahren und eine Vorrichtung der eingangs erwähnten Art zur Verfügung zu stellen, mit dem bzw. der durch vereinfachtes Vor- oder Nachbehandeln der entsprechenden Bauteile vor bzw. nach der Schweißnahtbildung die aufgezeigten Probleme besser bewältigbar sind; insbesondere sind bei der Aluminiumverschweißung das festigkeitsreduzierende Koagulationsverhalten von Aluminiumsegregaten positiv zu beeinflussen sowie lackierbare Nahtoberflächen z.B. für den Karosserieaußenbereich ohne Nacharbeit zu erzeugen. Weiterhin wird angestrebt, bei Stahlschweißungen die Umwandlungskinetik im Stahl zugunsten der Festigkeit und Zähigkeit zu verändern.

Diese Aufgabe wird erfindungsgemäß dadurch gelöst, daß die Einleitung der mechanischen Schwingungen in das Material mittels Abhämmern letzterer erfolgt.

Beim Abhämmern können die mechanischen Schwingungen mittels piezoelektrischer Schwinger oder mittels eines magnetostriktiven Elementes erzeugt werden.

Sollen Aluminiumbauteile miteinander verschweißt werden, so wird vorteilshafterweise vorlaufend zur Laserverschweißung die Versetzungsdichte der Aluminiumbauteile durch einen piezoeletrisch betriebenen Stempel erhöht. Sollen Kupferbauteile miteinander verschweißt werden, so wird die Laserschweißnaht nachlaufend mit einem piezoelektrisch angetriebenen Stempel so abgehämmert, daß die entstandene Erweichung des Kupfers wieder rückgängig gemacht wird.

Die erfindungsgemäße Vorrichtung zeichnet sich dadurch aus, daß das Bearbeitungselement von einem dem Schweißfokus des Laserstrahls vor- bzw. nachbewegbaren, senkrecht zur Oberfläche eines Bauteils bewegbaren und mit dieser in Eingriff bringbaren Stempel gebildet ist, der von einem mit ihm bewegbaren, sich an der trägen Masse der Führungseinrichtung abstützenden piezoelektrischen Schwinger druckmäßig entsprechend dessen Hubbewegung beaufschlagbar ist.

Vorzugsweise ist längs der Schweißrichtung jeweils vor und nach der Laseroptik ein mit einem piezoelektrischen Schwinger gekoppelter, längs der Schweißrichtung bewegbarer und über den piezoelektrischen Schwinger mit der Führungseinrichtung verbundener Stempel vorgesehen.

Der mechanische Hub des piezoelektrischen Schwingers beträgt etwa 0,3 mm, und die von letzterem ausgeübten Kräfte liegen im kN-Bereich.

Das erfindungsgemäße Verfahren erweist sich insbesondere dadurch als vorteilhaft, daß durch die beim Abhämmern in die Bauteile eingeleiteten mechanischen Schwingungen im betroffenen Werkstoffbereich atomare Versetzungen im Mikrogefüge entstehen. Die Energie dieses Bereiches steigt dadurch. Stattfindende thermische Vorgänge in der Wärmeeinflußzone einer Schweißnaht werden durch den erhöhten Energiebedarf positiv beeinflußt.

Bei Kupferschweißungen wird die beim Schweißen auftretende Entfestigung rückgängig gemacht. Bei Stahlschweißungen wird die Umwandlungskinetik im Stahl zugunsten der Festigkeit und Zähigkeit so verändert, daß die Versetzungsdichte im Gefüge gesteigert wird. Diese Versetzungsdichte verhindert dann die Koagulation von Körnern. Bei Aluminiumverschweißungen wird das festigkeitsreduzierende Koagulationsverhalten von Aluminiumsegregaten positiv beeinflußt, da die Dichte von Versetzungen, die Diffusionsbarrieren für die Segregate darstellen, erhöht wird. Da die Segregate nicht koagulieren können, entsteht keine bzw. nur eine geringe Erweichung des Werkstoffes beim Schweißen.

Die Oberfläche der Laserschweißnähte ist für gewöhnlich aufgrund der Erstarrungskinetik des verschweißten Werkstoffes in Abhängigkeit von der Schweißgeschwindigkeit mit einer schuppenartigen Struktur versehen. Da bei Einsatz der erfindungsgemäßen Vorrichtung über die Schweißnaht in kleinem Abstand zum Schweißfokus nachlaufend ein von einem piezoelektrischen Schwinger beaufschlagter Stempel geführt wird, wird die beim Schweißen entstandene Schuppung geglättet und eine Nahtoberfläche erzielt, die im Außenhautbereich von Karosserien einsetzbar ist. Bislang anfallende Nacharbeiten wie z.B. Spachteln und anschließendes Verschleifen erübrigen sich somit.

Die Erfindung wird nunmehr anhand der Zeichnungen erläutert. In diesen sind:
- Fig. 1: eine schaubildliche Darstellung der Vorrichtung im Einsatz des sogenannten vorlaufenden Verfahrens beim Verschweißen von Aluminiumbauteilen und
- Fig. 2: eine schaubildliche Darstellung der Vorrichtung im Einsatz des sogenannten nachlaufenden Verfahrens zur Nahtglättung z.B. von verschweißten Stahlbauteilen.

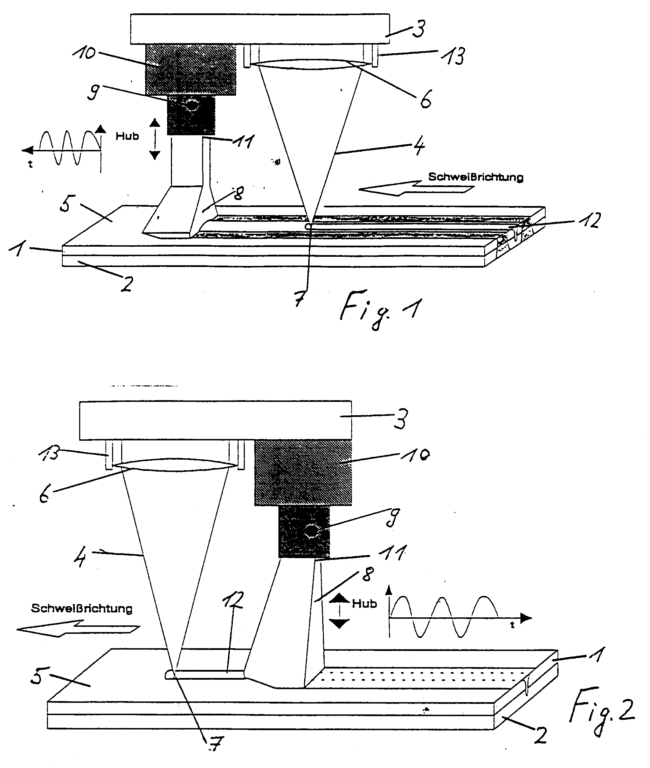

Wie aus den Fig. 1 und 2 hervorgeht, ist die Vorrichtung über den zu verschweißenden Bauteilen 1 und 2 in Schweißrichtung mittels einer Führungseinrichtung 3 bewegbar angeordnet, in der ein nicht dargestellter Laser vorgesehen ist, dessen Strahl 4 mittels einer an einer Halterung 13 der Führungseinrichtung 3 getragenen Laseroptik 6 auf der Oberfläche 5 des oberen Bauteils 1 im Punkt 7 fokussiert wird. Mit der Führungseinrichtung 3 bewegbar ist ein mit der Oberfläche 5 des oberen Bauteils 1 in Eingriff bringbarer Stempel 8 vorgesehen, der an seinem oberen Ende 11 mit einem piezoelektrischen Schwinger 9 gekoppelt ist, der mit dem Stempel 8 zusammen in Schweißrichtung bewegbar ist.

Der piezoelektrische Schwinger 9 stützt sich an der trägen Masse 10 der Führungseinrichtung 3 ab und beaufschlagt bei seiner Erregung (vgl. die entsprechenden Diagramme in den Fig. 1 und 2, die den Schwingungsverlauf des piezoelektrischen Schwingers 9 über die Zeit wiedergeben) entsprechend seiner Hubbewegung den Stempel 8 druckmäßig in Intervallen.

Bei der Anordnung der Vorrichtung gemäß Fig. 1 ist der piezoelektrisch angetriebene Stempel 8 in Schweißrichtung in verhältnismäßig kleinem Abstand zum Schweißfokus 7 vorlaufend geführt und sorgt bei seiner intervallmäßigen Bearbeitung der Oberfläche 5 des oberen Bauteils 1 aus Aluminium für eine Erhöhung der Versetzungsdichte derart, daß die Segregate nicht koagulieren können und somit nur eine geringe Erweichung des Aluminiums bei der nachfolgenden Verschweißung der Aluminiumbauteile 1 und 2 entsteht.

Gemäß Fig. 2 ist der piezoelektrisch angetriebene Stempel 8 in Schweißrichtung in verhältnismäßig geringem Abstand zum Schweißfokus 7 nachlaufend über die Schweißnaht 12 auf dem oberen Stahlbauteil 1 geführt, so daß durch das Hämmern des von dem piezoelektrischen Schwinger 9 getriebenen Stempels 8 die bei der vorausgegangenen Schweißung entstandene Schuppung der Schweißnaht 12 geglättet und eine Nahtoberfläche erzielt wird, die z.B. im Außenhautbereich einer Karosserie eingesetzt werden kann.

## Patentansprüche

1. Verfahren zur Vorbehandlung von insbesondere mittels Laserstrahlen (4) zu erzeugenden Schweißnähten (12) von Bauteilen (1,2) während des Schweißvorgangs, insbesondere aus Eisen- und Nichteisenmetallen durch Beinflussung der Werkstoffeigenschaften der zu verschweißenden Bauteile (1,2), wobei vorlaufend der Schweißnaht (12) mechanische Schwingungen zur Festigkeitssteigerung des Materials der Bauteile (1,2) in diese eingeleitet werden,
dadurch gekennzeichnet, daß
die Einleitung der mechanischen Schwingungen in das Material der Bauteile (1,2) mittels Abhämmern letzterer erfolgt.

2. Verfahren zur Nachbehandlung von insbesondere mittels Laserstrahlen (4) erzeugten Schweißnähten (12) von Bauteilen (1,2) während des Schweißvorgangs, insbesondere aus Eisen- und Nichteisenmetallen durch Beeinflussung der Werkstoffeigenschaften der verschweißten Bauteile (1,2), wobei nachlaufend der Schweißnaht (12) mechanische Schwingungen zur Beeinflussung der Erstarrungskinetik des Materials der Bauteile (1,2) in diese eingeleitet werden,
dadurch gekennzeichnet, daß
die Einleitung der mechanischen Schwingungen in das Material der Bauteile (1,2) mittels Abhämmern letzterer erfolgt.

3. Verfahren nach Anspruch 1,bei dem Aluminiumbauteile (1, 2) miteinander verschweißt werden, dadurch gekennzeichnet, daß vorlaufend zur Laserschweißung durch einen piezoelektrisch betriebenen Stempel (8) die Versetzungsdichte der Aluminiumbauteile (1,2) erhöht wird.

4. Verfahren nach Anspruch 2, bei dem Kupferbauteile (1,2) miteinander verschweißt werden, dadurch gekennzeichnet, daß die Laserschweißnaht (12) nachlaufend mit einem piezoelektrisch angetriebenen Stempel (8) so abgehämmert wird, daß die entstandene Erweichung des Kupfers wieder rückgängig gemacht wird.

5. Vorrichtung zur Vor- und / oder Nachbehandlung von Schweißnähten (12) von Bauteilen (1,2) insbesondere aus Eisen- und Nichteisenmetallen,mit einer in Schweißrichtung bewegbaren Führungseinrichtung (3) mit einem Laser und einer Laseroptik (6) sowie mindestens einem, bezogen auf letztere längs der Schweißrichtung versetzbaren Bearbeitungselement,
dadurch gekennzeichnet, daß
das Bearbeitungselement von einem dem Schweißfokus (7) des Laserstrahls (4) vor- bzw. nachbewegbaren,senkrecht zur Oberfläche eines Bauteils (1 bzw. 2) bewegbaren und mit dieser in Eingriff bringbaren Stempel (8) gebildet ist, der von einem mit ihn bewegbaren, sich an der trägen Masse (10) der Führungseinrichtung (3) abstützenden piezoelektrischen Schwinger (9) druckmäßig entsprechend dessen Hubbewegung beaufschlagbar ist.

6. Vorrichtung nach Anspruch 5, dadurch gekennzeichnet,daß längs der Schweißrichtung jeweils vor und nach der Laseroptik (6) ein mit einem piezoelektrischen Schwinger (9) gekoppelter, längs der Schweißrichtung bewegbarer und über den piezoelektrischen Schwinger (9) mit der Führungseinrichtung (3) verbundener Stempel (8) vorgesehen ist.

7. Vorrichtung nach Anspruch 5 und 6, dadurch gekennzeichnet, daß der mechanische Hub des piezoelektrischen Schwingers (9) etwa 0,3 mm beträgt und die von letzterem auf den Stempel (8) ausgeübten Kräfte im kN-Bereich liegen.

## Claims

1. Process for the pretreatment of weld seams (12), to be especially produced by means of laser beams (4), of building parts (1,2) during the welding process, especially of iron and nonferrous metals by influencing the material-characteristics of the building parts (1,2) to be welded, whereby prior to the weld seam (12) mechanical vibrations for increasing the stability of the material of the building parts (1,2) are led into them,
characterized thereby, that
leading mechanical vibrations into the material of the building parts (1,2) is done by means of hammering off the latter.

2. Process for the aftertreatment of weld seams (12), especially produced by means of laser beams (4), of building parts (1,2) during the welding process, especially of iron and nonferrous metals by influencing the material-characteristics of the welded building parts (1,2), whereby after the weld seam (12) mechanical vibrations for influencing the solidification kinetics of the material of the building parts (1,2) are led into them,
characterized thereby, that
leading mechanical vibrations into the material of the building parts (1,2) is done by means of hammering of the latter.

3. Process in accordance with claim 1, in which aluminum building parts (1,2) are welded together, characterized thereby, that the dislocation density of the aluminum building parts (1,2) is increased by a piezoelectrically operated stamp (8) prior to laser-welding.

4. Process in accordance with claim 2, in which copper building parts (1,2) are welded together, characterized thereby, that the laser weld seam (12) is hammered off afterwards with a piezoelectrically operated stamp (8) in such a manner, that the resulting softening of the copper is reversed.

5. Device for the pretreatment and/or aftertreatment of weld seams (12) of building parts (1,2), especially of iron or nonferrous metals, with a guiding device (3), movable in the welding direction, with a laser and a laser optic (6) as well as at least one, in reference to the latter, treatment element displacable along the welding direction,
characterized thereby, that
the treatment element is formed by a stamp (8) which is movable before and after the welding focus (7) of the laser beam (4) and can be moved vertical to the surface of a building part (1 and/or 2) and be brought in contact with it, and which is able to move a piezoelectrical oscillator (9) which supports itself at the inert mass (10) of the guiding device (3) and to which pressure can be applied in accordance with its lift-movement.

6. Device in accordance with claim 5, characterized thereby, that along the welding direction - in each case before and after the laser optic (6) - a stamp (8) is provided which is coupled to a piezoelectric oscillator (9) and can be moved along the welding direction and is connected by means of the piezoelectric oscillator (9) with the guiding device (3).

7. Device in accordance with claims 5 and 6, characterized thereby, that the mechanical lift of the piezoelectric oscillator (9) amounts to ca. 0.3 mm and the forces exerted by the latter on the stamp (8) lie in the kN-range.

## Revendications

1. Procédé pour le traitement préalable de soudures (12) à réaliser spécialement au moyen de faisceaux laser (4) de pièces (1,2) durant le processus de soudage, tout particulièrement en métaux ferreux et non-ferreux en influençant les caractéristiques des matériaux des pièces à souder (1,2) tout en introduisant avant la soudure (12) des vibrations mécaniques en vue de l'augmentation de la résistance du matériel des pièces (1,2),
caractérisé par le fait que
cette introduction des vibrations mécaniques dans le matériel des pièces (1,2) est réalisée moyennant le martelage de celles-ci.

2. Procédé pour le traitement subséquent de soudures (12) réalisées spécialement au moyen de faisceaux laser (4) de pièces (1,2) durant le processus de soudage, tout particulièrement en métaux ferreux et non-ferreux en influençant les caractéristiques des matériaux des pièces soudées (1,2) tout en introduisant après la soudure (12) des vibrations mécaniques dans le but d'influencer la cinétique de solidification du matériel des pièces (1,2),
caractérisé par le fait que
cette introduction des vibrations mécaniques dans le matériel des pièces (1,2) est réalisée moyennant le martelage de celles-ci.

3. Procédé suivant revendication 1 pour le soudage de pièces en aluminium (1,2), caractérisé par le fait qu'avant le soudage par laser la densité des dislocations des pièces en aluminium (1,2) est augmentée par un poinçon (8) à commande piézoélectrique.

4. Procédé suivant revendication 2 pour le soudage de pièces en cuivre (1,2), caractérisé par le fait que la soudure par laser (12) est martelée après avec un poinçon (8) à commande piézoélectrique de manière à inverser le ramollissement du cuivre.

5. Dispositif pour le traitement préalable et/ou subséquent de soudures (12) de pièces (1,2) tout particulièrement en métaux ferreux et non-ferreux avec un dispositif de guidage (3) amovible en direction de soudage avec un laser et une optique laser (6) ainsi qu'avec au moins un élément d'usinage déplaçable longitudinalement à la direction de soudage par rapport à cette dernière,
caractérisé par le fait que
l'élément d'usinage est constitué par un poinçon (8) amovible avant ou derrière le point focal de soudage (7) du faisceau laser (4) et amovible verticalement à la surface d'une pièce (1,2) et pouvant être mis en prise avec celle-ci, pouvant être alimenté par un vibrateur (9) piézoélectrique amovible avec lui s'appuyant à la masse inerte (10) du dispositif de guidage (3) avec une pression correspondante à la course.

6. Dispositif suivant revendication 5, caractérisé par le fait que longitudinalement à la direction de soudage avant et derrière l'optique laser (6) est prévu un poinçon (8) couplé au vibrateur piézoélectrique (9), amovible longitudinalement à la direction de soudage et relié au dispositif de guidage (3) par-dessus le vibrateur piézoélectrique (9).

7. Dispositif suivant revendications 5 et 6, caractérisé par le fait que la course mécanique du vibrateur piézoélectrique (9) est d'environ 0,3 mm et que les forces exercées par ce dernier sur le poinçon (8) se situent dans la gamme kN.
